# EUROPÄISCHE PATENTANMELDUNG

(11) **EP 3 739 008 A1**
(43) Veröffentlichungstag der Anmeldung: **18.11.2020**
(21) Anmeldenummer: 19174236.0
(22) Anmeldetag: 13.05.2019
(51) Int. Cl.: C09D 5/34, C09D 7/65, C09D 125/14, C09D 5/02, C04B 28/00, C09K 3/10

(54) **WÄSSRIGE BESCHICHTUNGSMASSE, INSBESONDERE PASTÖSE WÄSSRIGE BESCHICHTUNGSMASSE, BESCHICHTUNG ERHÄLTLICH AUS DER BESCHICHTUNGSMASSE UND DEREN VERWENDUNG**

(71) Anmelder: DAW SE, 64372 Ober-Ramstadt (DE)
(72) Erfinder: ZIDEK, Claudia, 99819 Marksuhl (DE); STANICZEK, Martina, 36208 Wildeck (DE)
(74) Vertreter: Metten, Karl-Heinz

(57) **Zusammenfassung**

Die vorliegende Erfindung betrifft eine wässrige Beschichtungsmasse, insbesondere eine pastöse wässrige Beschichtungsmasse, enthaltend einen hydrophob modifizierten Hydroxycelluloseether, ein Rheologieadditiv, umfassend einen organisch modifizierten Schichtsilikat-Verdicker, ein Dispergiermittel, einen Füllstoff, Calciumhydroxid, ein organisches Bindemittel in Form einer wässrigen Polymerdispersion und Wasser, wobei die Beschichtungsmasse einen pH-Wert größer oder gleich 10,0, ermittelt gemäß DIN 55659-1:2012-1 bei einer Temperatur von 23 ± 2 °C, aufweist und wobei die Beschichtungsmasse, bezogen auf deren Gesamtgewicht, mehr als 60,0 Gew.-% an Füllstoffen aufweist. Ferner betrifft die Erfindung eine Beschichtung für ein Substrat erhalten aus der erfindungsgemäßen Beschichtungsmasse sowie die Verwendung dieser Beschichtungsmasse für die Anbringung auf einer Gebäudewand oder Gebäudedecke im Innenbereich.

## Beschreibung

Die vorliegende Erfindung betrifft eine wässrige Beschichtungsmasse, insbesondere eine pastöse wässrige Beschichtungsmasse, vorzugsweise Spachtelmasse. Des Weiteren betrifft die Erfindung eine Beschichtung für ein Substrat, erhalten oder erhältlich aus der erfindungsgemäßen Beschichtungsmasse sowie die Verwendung der erfindungsgemäßen Beschichtungsmasse für die Anbringung auf einer Gebäudewand oder Gebäudedecke im Innenbereich.

Beschichtungsmassen finden in den verschiedensten Formen Verwendung und sind sowohl für den Innen- als auch für den Außeneinsatz bekannt. Insbesondere für Innenanwendungen werden als Beschichtungsmassen häufig sogenannte Spachtelmassen eingesetzt, beispielsweise um Wandflächen vor der weiteren Bearbeitung optimal einzuebnen. Eine bekannte Problemstellung ist es, dass die Haftung dieser Beschichtungsmassen zu den zu bearbeitenden Untergründen, beispielsweise gipsbasierten Untergründen wie Gipskarton und Gipsbauwänden nicht immer den gewünschten Anforderungen genügt. Dies betrifft vor allem biozidfreie Spachtelmassen. Darüber hinaus hat sich bei Versuchen mit solchen biozidfreien Spachtelmassen gezeigt, dass auf den derart erhaltenen Oberflächen jahreszeitenabhängig, d.h. unter bestimmten Temperatur- und Feuchtigkeitsbedingungen Bakterien-, Schimmel- oder Algenbildung nicht unterbunden werden kann.

Zur Vermeidung von Algen- und Schimmelbildung greift man bei noch stets häufig auf organische Algizide und Fungizide zurück. Derartige aus dem Stand der Technik bekannte Biozide sind beispielsweise 2-Methoxycarbonylaminobenzimidazol, 2-Mercaptopyridin-N-oxid, n-Octylisothiazolon und Iodpropinylbutylcarbamat, 1,1-Dimethyl-3-(3,4-dichlorphenyl)harnstoff (Diuron) und tButyl-ethyl-6-methylthio-1,3,5-triazin-2,4-diamin (Terbutryn).

DE 4242389 C2 beschreibt eine Biozidzusammensetzung für Farben, Lacken und Putze, wobei als Fungizid Carbendazim sowie 2-(Thiocyanomethylthio)benzothiazol (TCMTB) und als Algizid 2-Methylthio-4-t-butylamino-6-cyclopropylamino-s-triazin verwendet wird.

DE 10 2005 045 129 A1 beschreibt beispielsweise ein Konservierungsmittel für Beschichtungszusammensetzungen, das Isothiazolon, eine quartäre Ammoniumverbindung und einen Stabilisator umfasst.

WO 2004 000 953 A1 beschreibt eine Beschichtungsmasse zum Schutz gegen Mikroorganismenbefall von Oberflächen, die der Einwirkung von Feuchtigkeit oder Wasser ausgesetzt sind, wobei die Beschichtungsmasse entweder selbst einen pH-Wert von mindestens 11,0 aufweist oder für das Beschichten eines Untergrundmaterials vorgesehen ist, dessen pH-Wert mindestens 11,0 beträgt, wobei die Beschichtungsmasse ein Biozid enthält, das in einem Trägermaterial aus Feststoffteilchen gebunden ist und daraus verzögert freigegeben wird.

DE 10144187 A1 beschreibt ein Konservierungsmittel für Beschichtungszusammensetzungen, welches eine oder mehrere, quartäre Ammoniumverbindungen und ein oder mehrere Alkalisierungsmittel, ausgewählt aus Alkalimetallhydroxid, -carbonat, -hydrogencarbonat und -silikat, Erdalkalioxid, -hydroxid, -hydrogencarbonat und -silikat und Al(OH)₃ umfasst.

Die stetige Übertragung des Biozids in ein wässriges System ist Grundvoraussetzung für die Bioaktivität. Biozide sind regelmäßig nur in wässrigen Systemen an der Oberfläche gegen Bakterien, Schimmel oder Algen wirksam. Daher sind geeignete organischen Biozide zu einem gewissen Maße wasserlöslich, werden mithin durch Regen ausgewaschen oder bei hoher Luftfeuchtigkeit mit Kondenswasser ausgeschieden. Dies hat Nachteile für die Umwelt, insbesondere falls Biozide in Gewässern nicht abgebaut werden. Auch geht über diesen Auswaschprozess nach einiger Zeit die biozide Wirkung verloren, sodass es dann zeitlich verzögert noch stets zur Algen- und Schimmelbildung an Gebäudewänden kommt.

Auch Beschichtungsmassen ohne organische Biozide sind aus dem Stand der Technik bekannt.

DE 3 932 990 C2 offenbart ein Verfahren zur Konservierung von Natursteinen, Naturwerksteinen und historischen Putzen, insbesondere Baudenkmälern unter Verwendung von Lithiumsilikaten, wobei eine wäßrige, natrium-, kalium- und polymerfreie Lithiumpolysilikatlösung mit einer maximalen Viskosität von 10 mPas, einem maximalen Feststoffgehalt von 30 Gew.-% und einem Li2O/SiO2-Verhältnis von 1 : 3,5 bis 1 : 7 in situ verwendet wird.

DE 10 2006 049 923 B4 offenbart eine Dispersion zur Behandlung von organischem und/oder anorganischem Material gegen Schimmelpilze, Bakterien und/oder Algen gebildet aus einem alkoholischen Dispersionsmittel und einer dispersen Phase aus kolloidalen Calciumhydroxid-Partikeln. Diese Partikel haben dabei einen mittleren Partikeldurchmesser von 0,01 bis 10 µm aufzuweisen, und ihre Konzentration in der Dispersion liegt bei 0,01 bis 15 Gew.-%.

Kalkmörtel sind ebenfalls bekannt. Hierbei handelt es sich im Regelfall um eine Mischung aus Sand und gelöschtem Kalk (Calciumhydroxid). Das Calciumhydroxid reagiert als Bindemittel mit Kohlenstoffdioxid aus der Luft zu Kalk, wobei letzterer nicht mehr basisch ist. Es wird üblicherweise ein Verhältnis von Sand zu Kalk von 2:1 bis 5:1 gewählt (https://de.wikipedia.orglwiki/Kalkmörtel, Stand 8.5.2017).

Ein Vorteil ist, dass die anorganische Base kaum eine Gefahr für die Umwelt darstellt. Ein Nachteil der vorstehend genannten Putze ist, dass die Wirkung gegen Schimmel und Algen meist nicht besonders lange anhält.

Der vorliegenden Erfindung hat daher die Aufgabe zugrunde gelegen, eine Beschichtungsmasse bereitzustellen, welche nicht mit den geschilderten Nachteilen des Stands der Technik behaftet ist und die insbesondere eine verbesserte Langzeitwirkung gegen Schimmel- und Algenbildung, und zwar auch ohne den Einsatz herkömmlicher organischer Biozide, aufweist und vorzugsweise zudem in hohem Maße umweltverträglich ist. Eine weitere bevorzugte Aufgabe ist es, eine Beschichtungsmasse bereitzustellen, die eine bessere Haftung auf Gebäudeoberflächen, insbesondere gipsbasierten Gebäudeoberflächen liefert. Auch hat der vorliegenden Erfindung vorzugsweise die Aufgabe zugrunde gelegen, solche Beschichtungsmassen zur Verfügung zu stellen, die anwendungsfreundliche applizierbar sind.

Demgemäß wurde eine wässrige Beschichtungsmasse, vorzugsweise pastöse wässrige Beschichtungsmasse, insbesondere Spachtelmasse, insbesondere für den Innenbereich, gefunden, enthaltend oder bestehend aus
a) mindestens einem hydrophob modifizierten Hydroxycelluloseether und/oder mindestens ein Reaktionsprodukt aus einem hydrophob modifizierten Hydroxycelluloseether und einer ersten chemischen Verbindung, die mindestens eine Aldehydgruppe und mindestens eine Säuregruppe enthält, und/oder mindestens ein Reaktionsprodukt aus einem hydrophob modifizierten Hydroxycelluloseether und einer zweiten chemischen Verbindung, die mindestens zwei Aldehydgruppen enthält,
b) mindestens einem Rheologieadditiv, umfassen oder bestehend aus mindestens einem organisch modifizierten Schichtsilikat-Verdicker,
c) mindestens einem Dispergiermittel,
d) mindestens einem Füllstoff, insbesondere Calciumcarbonat,
e) Calciumhydroxid,
f) mindestens einem organischen Bindemittel in Form einer wässrigen Polymerdispersion und
g) Wasser,
wobei die Beschichtungsmasse, insbesondere Spachtelmasse, einen pH-Wert größer oder gleich 10,0, ermittelt gemäß DIN 55659-1:2012-1 bei einer Temperatur von 23 ± 2 °C, aufweist, und wobei die Beschichtungsmasse, insbesondere Spachtelmasse, bezogen auf deren Gesamtgewicht, mehr als 60,0, bevorzugt 62,0 bis 80,0 und besonders bevorzugt 64,0 bis 78,0 Gew.-% an Komponente d) aufweist.

Die erfindungsgemäße, insbesondere pastöse, Beschichtungsmasse ist alkalisch eingestellt und verfügt über einen pH-Wert von mindestens 10,0. In besonders bevorzugten Ausführungsformen ist der pH-Wert der erfindungsgemäßen, insbesondere pastösen, Beschichtungsmassen, insbesondere Spachtelmassen größer oder gleich 10,5, bevorzugt größer oder gleich 11,5 und besonders bevorzugt im Bereich von 11,5 bis 13,0 oder von 12,0 bis 13,0. Es hat sich überraschenderweise gezeigt, dass auch mit solchen erfindungsgemäßen Beschichtungsmassen, die über einen pH-Wert im Bereich von 11,5 bis 13,0 bzw. im Bereich von 12,0 bis 13,0 verfügen, keine hautreizenden oder irritierenden Eigenschaften einhergehen. Der pH-Wert der erfindungsgemäßen Beschichtungsmassen wird dabei ermittelt gemäß DIN 55659-1:2012-1 bei einer Temperatur von 23 ± 2 °C. Hierfür können pH-Elektroden mit Glasmembran verwendet werden. Ein geeignetes pH-Meter ist zum Beispiel das Messgerät SevenEasy (Messbereich pH 0,00-14,00) der Firma Mettler Toledo unter Verwendung der Elektrode InLab ExpertPro (Best.-Nr.: 51343101), ebenfalls von der Firma Mettler Toledo.

Es wurde überraschend gefunden, dass sich mit den erfindungsgemäßen Beschichtungsmassen über einen besonders langen Zeitraum ein stabiler alkalischer pH-Wert aufrechterhalten lässt, der mit einer algiziden und/oder fungiziden Wirkung, insbesondere mit einer algiziden und fungiziden Wirkung, verbunden ist. Dies gelingt insbesondere mit solchen erfindungsgemäßen Beschichtungsmassen, bei denen die Komponente a) einen hydrophob modifizierten Hydroxycelluloseether darstellt oder umfasst, die Komponente b) einen organisch modifizierten Schichtsilikat-Verdicker darstellt und die Komponente f) ein Styrol/Acrylat-Copolymer-Bindemittel in Form einer wässrigen Polymerdispersion darstellt.

Die erfindungsgemäße Beschichtungsmasse, insbesondere Spachtelmasse, liegt vorzugsweise in pastöser Form bzw. als pastöse Masse vor. Unter einer pastösen Masse wird im Sinne der Erfindung ein Feststoff-Flüssigkeitsgemisch, vorzugsweise mit einem hohen Gehalt an Festkörpern, verstanden, so dass die pastöse Masse nach Applikation an einer vertikalen Wandfläche nicht mehr frei abfließt, sondern gezielt verstrichen werden kann, vorzugsweise streichfest ist.

Das Viskositäts- bzw. Rheologie-Verhalten der erfindungsgemäßen Beschichtungsmassen kann in einer geeigneten Ausgestaltung mittels eines Rotationsrheometers bestimmt werden. Die Viskositäten η der erfindungsgemäßen Beschichtungsmassen sind dabei gemäß DIN 53019 (Ausgabe 05/1980) zu ermitteln. Diese Viskositäten η lassen sich z.B. mit dem Rotationsrheometer Physika Rheolab MC 1 der Firma Anton Paar unter Verwendung der Software US200/32 V2.50 bestimmen. Um vergleichbare Ergebnisse zu erhalten, sollten die Messungen bei konstanter Raumtemperatur, beispielsweise bei 23 ±0,20 °C vorgenommen werden. Im Allgemeinen reicht es aus, eine Rotationsrampe von 0,01 bis 100 1/s im Zeitraum von 100 s zu fahren. Hierbei wird die Messung derart vorgenommen, dass zunächst für 600 s das Messsystem temperiert wird, anschließend über 100 s die Rotationsgeschwindigkeit von 0,01 auf 100 1/s gesteigert, sodann für 150 s bei der Rotationsgeschwindigkeit von 100 1/s gehalten abschließend für weitere 100 s die Rotationsgeschwindigkeit von 100 auf 0,01 l/s zurückgefahren wird. Die Viskosität η der erfindungsgemäßen Beschichtungsmasse wird dabei aus dem zweiten Segment (konstante Umdrehungszahl) bei 100 1/s in der Weise ermittelt, dass der Mittelwert genommen wird aus dem Messpunkt bei Erreichen der Scherrate von 100 s⁻¹ und dem Messpunkt bei Verlassen der Scherrate von 100 s⁻¹. Form und Material bzw. die Messgeometrie der Messapparatur bzw. des Rotors basieren zweckmäßigerweise auf der Spezifikation Z2DIN.

Vorzugsweise weist die erfindungsgemäße pastöse Beschichtungsmasse, insbesondere Spachtelmasse, eine Viskosität η von mindestens 0,5 Pa·s, vorzugsweise von mindestens 1,0 Pa·s, jeweils gemessen bei einer Temperatur von 23 ± 0,20 °C und einer Scherrate von 100 s⁻¹, wie im vorangehenden Absatz beschrieben, mit dem Messbecher Z2DIN mit einem Durchmesser von 45 mm und dem Messzylinder Z3DIN mit einem Durchmesser von 25 mm, auf.

Die der Erfindung zugrunde liegende Aufgabe bzw. die zugrunde liegenden Aufgaben werden besonders zufriedenstellend auch durch solche erfindungsgemäßen Beschichtungsmassen, insbesondere Spachtelmassen, gelöst, die bei einer Temperatur von 23 ±0,20 °C einer innerhalb von 100 sec stetig ansteigenden Scherrate von 0,01 bis 100 s⁻¹, anschließend für die Dauer von 150 sec einer Scherrate von 100 s⁻¹ und gegebenenfalls abschließend einer innerhalb von 100 sec stetig abfallenden Scherrate von 100 bis 0,01 s⁻¹ ausgesetzt wurden, und die in Bezug auf die Messpunkte bei Erreichen der Scherrate von 100 s⁻¹ und bei Verlassen der Scherrate von 100 s⁻¹ eine Viskositätsdifferenz bzw. Viskositätserniedrigung von maximal 0,3 Pa·s, vorzugsweise von maximal 0,2 Pa·s und besonders bevorzugt von maximal 0,15 Pa·s, aufweisen.

Besonders geeignete hydrophob modifizierte Hydroxycelluloseether bestehen aus oder umfassen Hydroxyalkylcelluloseether, insbesondere Hydroxyethylcelluloseether und/oder Hydroxypropylcelluloseether. Bevorzugt wird für die Verbindungen der Komponente a) zurückgegriffen auf Hydroxyethylmethylcellulose, Hydroxypropylmethylcellulose, Ethylhydroxyethylcellulose, Hydroxyethylcellulose, Hydroxypropylcellulose oder deren beliebige Mischungen.

Grundsätzlich sind auch solche hydrophob modifizierten Hydroxycelluloseether besonders geeignet, die über Alkyl-Seitenketten mit mehr als zwei C-Atomen verfügen.

Stellt die Komponente a) ein Reaktionsprodukt aus einem hydrophob modifizierten Hydroxycelluloseether und der ersten chemischen Verbindung, die mindestens eine Aldehydgruppe und mindestens eine Säuregruppe enthält, dar, hat es sich als vorteilhaft erwiesen, auf solche ersten chemischen Verbindungen zurückzugreifen, die mit der oder den Hydroxygruppen des Hydroxycelluloseethers unter Wasserabspaltung das Reaktionsprodukt bilden. Und stellt die Komponente a) ein Reaktionsprodukt aus einem hydrophob modifizierten Hydroxycelluloseether und der zweiten chemischen Verbindung mit den mindestens zwei Aldehydgruppen dar, hat es sich als vorteilhaft erwiesen, auf solche zweiten chemisehen Verbindungen zurückzugreifen, die mit der oder den Hydroxygruppen des Hydroxycelluloseethers unter Wasserabspaltung das Reaktionsprodukt bilden.

Für die erste chemische Verbindung mit der mindestens einen Aldehydgruppe und der mindestens einen Säuregruppe wird bevorzugt auf Glyoxalsäure zurückgegriffen. Die zweite chemische Verbindung mit den mindestens zwei Aldehydgruppen umfasst oder besteht vorzugsweise aus Glyoxal und/oder Glutaraldehyd, insbesondere Glyoxal.

Neben der Komponente a) verfügen die erfindungsgemäßen, insbesondere pastösen; wässrigen Beschichtungsmassen auch über mindestens ein Rheologieadditiv (Komponente b)), umfassend oder bestehend aus mindestens einem organisch modifizierten Schichtsilikat-Verdicker. Geeignete organisch modifizierte Schichtsilikat-Verdicker können hierbei zum Beispiel auf Bentoniten oder Hectoriten basieren, wobei organisch modifizierte Bentonitbasierte Schichtsilikat-Verdicker besonders bevorzugt sind.

Darüber hinaus können die erfindungsgemäßen, insbesondere pastösen, Beschichtungsmasse ferner auch Polyacrylat-Verdicker, Polyurethan-Verdicker, Polyharnstoff-Verdicker, Polyvinylalkohol-Verdicker, Polyetherpolyol-Verdicker, nicht organisch modifizierte Schichtsilikat-Verdicker, Stärkeether-Verdicker, Celluloseether-Verdicker, der kein Celluloseether-Verdicker gemäß Komponente a) ist, Polysaccharid-Verdicker oder deren beliebige Mischungen umfassen. Besonders bevorzugt wird unter diesen weiteren Rheologieadditiven auf Xanthan und/oder Fettalkoholethoxylat-Verdicker zurückgegriffen, wobei Fettalkoholethoxylat-Verdicker besonders bevorzugt sind.

Darüber hinaus sind solche erfindungsgemäßen, insbesondere pastösen, Beschichtungsmassen bevorzugt, bei denen das Dispergiermittel (Komponente c)) Natriumpolyphosphat, insbesondere in Form eines Natriumpolyphosphatsalzes von, vorzugsweise niedermolekularen, Polyacrylsäuren, umfasst oder hieraus besteht.

Für die erfindungsgemäßen Beschichtungsmassen kann für die Füllstoffe (Komponente d)) auf calcitische Füllstoffe, bevorzugt Calciumcarbonat, Magnesiumcarbonat und/oder Calcium/Magnesiumcarbonat, und/oder silikatische Füllstoffe zurückgegriffen werden, wobei calcitische Füllstoffe bevorzugt sind. Ganz besonders bevorzugt umfassen und vorzugsweise bestehen die Füllstoffe aus Calciumcarbonat und/oder Calcium/Magnesiumcarbonat, wobei Calciumcarbonat besonders bevorzugt ist. Neben der Mischung aus Calciumcarbonat und Calcium/Magnesiumcarbonat kann demgemäß ebenfalls bevorzugt ausschließlich auf Calciumcarbonat als Füllstoff zurückgegriffen werden. In einer weiteren bevorzugten Ausgestaltung ist es vorgesehen, dass die erfindungsgemäße Beschichtungsmasse keine silikatischen Füllstoffe umfasst oder nicht mehr als 2 Gew.-%.

Besonders bevorzugt sind solche erfindungsgemäßen Beschichtungsmassen, in denen nur solche Füllstoffe d) vorliegen, die über eine durchschnittliche Partikelgröße, bestimmt mittels Luftstrahlsiebung gemäß DIN EN 933-10:2009-10, beispielsweise mit einem Alpine-Luftstrahlsieb 200 LS-N von der Firma HOSOKAWA ALPINE Aktiengesellschaft, Augsburg, Deutschland, kleiner oder gleich 1000 µm, bevorzugt kleiner oder gleich 500 µm und besonders bevorzugt kleiner oder gleich 300 µm verfügen. Insbesondere bevorzugt sind hierbei solche erfindungsgemäßen Beschichtungsmassen, in denen nur solche Füllstoffe d) vorliegen, die über eine maximale Partikelgröße, bestimmt mittels Luftstrahlsiebung gemäß DIN EN 933-10:2009-10 (siehe oben), kleiner oder gleich 1500 µm, bevorzugt kleiner oder gleich 750 µm und besonders bevorzugt kleiner oder gleich 500 µm verfügen.

Insbesondere ist auch eine solche Ausführungsform bevorzugt, bei der Calciumhydroxid in einer Menge von 0,1 bis 8,0 Gew.-%, insbesondere 0,5 bis 4,5 Gew.-% und vorzugsweise 1,0 bis 2,5 Gew.-%, vorliegt. Es hat sich gezeigt, dass die biozide Langzeitwirkung mit diesen Mengen in den erfindungsgemäßen Beschichtungsmassen besonders gut erreicht werden kann.

Auch enthalten die erfindungsgemäßen Beschichtungsmassen mindestens organisches Bindemittel (Komponente f)) in Form einer wässrigen Polymerdispersion. Der Gewichtsanteil (Feststoffanteil) des organischen Bindemittels ist dabei vorzugsweise höher ist als der Gewichtsanteil an Calciumhydroxid.

Besonders bevorzugt sind solche Ausführungsformen der erfindungsgemäßen Beschichtungsmassen, die 0,5 bis 7,0, bevorzugt 0,8 bis 5,0 und besonders bevorzugt 1,5 bis 4,0 Gew.-% (jeweils Feststoffanteil) an dem organischen Bindemittel enthalten. Besonders geeignete organische Bindemittel in Form einer wässrigen Polymerdispersion basieren auf Homo- und/oder Copolymeren enthaltend Acrylate, Methacrylate, Vinylacetat und/oder Styrol. Bevorzugt wird hierbei auf Copolymere auf Basis von Vinylacetat und Ethylen oder auf Copolymere auf Basis von Styrol und Acrylaten zurückgegriffen, wobei Copolymere auf Basis von Styrol und Acrylaten besonders bevorzugt sind, insbesondere auch um gute Haftungseigenschaften bei gleichzeitig guter biozider Langzeitwirkung zu erzielen.

Der Wasseranteil (Komponente g)) der erfindungsgemäßen Beschichtungsmassen, insbesondere Spachtelmassen, liegt insbesondere im Bereich von 15,0 bis 55,0, bevorzugt von 18 bis 50,0 und besonders bevorzugt von 22 bis 45 Gew.-%. In einer Ausgestaltung handelt es sich bei der Beschichtungsmasse vorzugsweise um eine Fertigbeschichtungsmasse, d.h. die Beschichtungsmasse kann unmittelbar aufgetragen werden, ohne dass eine weitere Behandlung, insbesondere eine Verdünnung mit Wasser, erforderlich ist. In einer alternativen, weniger bevorzugten Ausgestaltung ist die Beschichtungsmasse ausgelegt und eingerichtet, um vor dem Auftragen auf die zu beschichtende Oberfläche verdünnt zu werden, insbesondere mit Wasser.

In zweckmäßigen Ausgestaltungen verfügen die erfindungsgemäßen, insbesondere pastösen; Beschichtungsmassen ferner über
h) mindestens ein bei Raumtemperatur flüssiges organisches Lösungsmittel,
i) mindestens ein Fasermaterial,
j) mindestens einen Entschäumer und/oder
k) mindestens ein Pigment, insbesondere Buntpigment.

Besonders geeignete bei Raumtemperatur flüssige organische Lösungsmittel umfassen insbesondere aliphatische organische Lösungsmittel, wobei Di- und/oder Polyole besonders bevorzugt sind. Exemplarisch sei 1,2-Propylenglykol als besonders geeignetes organisches Lösungsmittel genannt.

Geeignete Fasermaterialien, sofern diese in den erfindungsgemäßen Beschichtungsmasse zum Einsatz kommen, sind zweckmäßigerweise ausgewählt aus der Gruppe bestehend aus Cellulosefasern, Glasfasern, Polyolefinfasern, insbesondere PE-Fasern und/oder PP-Fasern, PAN-Fasern, Carbonfasern, Hanffasern, Strohfasern, Schilffasern, Holzweichfasern und deren beliebigen Mischungen. Besonders bevorzugt wird auf Cellulosefasern zurückgegriffen.

In einer weiteren Ausgestaltung enthalten die erfindungsgemäßen Beschichtungsmassen zusätzlich mindestens ein Pigment, insbesondere Weißpigment. Als geeignete anorganische Weißpigmente kommen zum Beispiel Titandioxid, Zinkweiß, Farbenzinkoxid, Zinksulfid und/oder Lithopone und/oder Ettringit in Betracht. Überraschenderweise gelingt es mit den erfindungsgemäßen Beschichtungsmassen, ein zufriedenstellendes Trockendeckvermögen auch ohne Titandioxid oder nahezu ohne Titandioxid, d.h. mit Gehalten kleiner 1,0 Gewichtsprozent, zu erhalten. Wird ein Pigment zugesetzt, hat sich regelmäßig auch die, insbesondere vorgeschaltete, Zugabe mindestens eines Dispergieradditivs, beispielsweise auf Basis von Polyacrylaten wie Natriumpolyacrylat, als zweckdienlich erwiesen.

Die erfindungsgemäßen Beschichtungsmassen können darüber hinaus auch Pigmente enthalten, wobei jedoch solche erfindungsgemäßen Beschichtungsmassen bevorzugt sind, die im Wesentlichen frei von Pigmenten sind. Eine erfindungsgemäße Beschichtungsmasse kann im Sinne der Erfindung als im Wesentlichen frei von Pigmenten angesehen werden, wenn die Menge an diesen Pigmenten, sofern vorhanden und analytisch nachweisbar, derart gering ist, dass deren Anwesenheit in den Beschichtungsmassen keine visuell wahrnehmbare Farbveränderung der mit diesen Beschichtungsmassen erhaltenen Beschichtungen mit sich bringt. Ausführungsformen der erfindungsgemäßen Beschichtungsmasse, in denen Pigmente vorliegen, können dabei zum Beispiel ausgestattet sein mit anorganischen Pigmenten wie Bunt-, Schwarz- und Weißpigmenten (Farbpigmente) sowie mit Glanzpigmenten oder mit organischen Pigmenten wie organischen Bunt- und Schwarzpigmenten.

Als geeignete anorganische Weißpigmente kommen zum Beispiel Titandioxid, Zinkweiß, Farbenzinkoxid; Zinksulfid und/oder Lithopone und/oder Ettringit in Betracht. Diese anorganischen Weißpigmente, z.B. Titandioxid, liegen in den erfindungsgemäßen Beschichtungsmassen in einer geeigneten Ausführungsform in einer Menge im Bereich von 0,1 bis 10,0 Gew.-% oder in einer Menge im Bereich von 0,5 bis 5,0 Gew.-%, vor. Eine erfindungsgemäße Beschichtungsmasse kann in einer zweckmäßigen Ausgestaltung im Sinne der vorliegenden Erfindung als im Wesentlichen frei von Weißpigmenten angesehen werden, wenn darin weniger als 0,1 Gewichtsprozent, bevorzugt weniger als 0,01 Gewichtsprozent und besonders bevorzugt weniger als 0,001 Gewichtsprozent, beispielsweise weniger als 0,0001 Gewichtsprozent, an Weißpigmenten enthalten sind.

Unter den anorganischen Schwarzpigmenten kann zum Beispiel ausgewählt werden unter Eisenoxidschwarz, Eisen-Mangan-Schwarz, Spinellschwarz und/oder Ruß.

Als geeignete anorganische Buntpigmente kann zum Beispiel zurückgegriffen werden auf Chromoxid, Chromoxidhydratgrün, Chromgrün, Cobaltgrün, Ultramaringrün, Kobaltblau, Ultramarinblau, Manganblau, Ultramarinviolett, Kobalt- und Manganviolett, Eisenoxidrot, Cersulfid, Molybdatrot, Ultramarinrot, Eisenoxidbraun, Mischbraun, Spinell- und Korundphasen, Chromtitangelb, Zinnzinktitanat, Chromorange, Eisenoxidgelb, Nickeltitangelb, Chromgelb und/oder Bismutvanadat. Besonders geeignete Pigmente umfassen zum Beispiel Titandioxid, Zinksulfid, Zinkoxid, Baryt, Ruß, Eisenoxid, Chromoxid, Kobaltblau, Spinellpigment, Nickeltitanat, Chromtitanat und deren beliebige Mischungen.

Diese anorganischen Buntpigmente liegen in den erfindungsgemäßen Beschichtungsmassen in einer geeigneten Ausführungsform in einer Menge im Bereich von 0,01 bis 2,0 Gew.-% oder in einer Menge im Bereich von 0,05 bis 1,0 Gew.-%, vor. Eine erfindungsgemäße Beschichtungsmasse kann in einer zweckmäßigen Ausgestaltung im Sinne der vorliegenden Erfindung als im Wesentlichen frei von Bunt- oder Schwarzpigmenten, vorzugsweise Bunt- und Schwarzpigmenten, angesehen werden, wenn darin weniger als 0,01 Gewichtsprozent, bevorzugt weniger als 0,001 Gewichtsprozent und besonders bevorzugt weniger als 0,0001 Gewichtsprozent, beispielsweise weniger als 0,00001 Gewichtsprozent, an Bunt- oder Schwarzpigmenten, vorzugsweise Bunt- und Schwarzpigmenten, enthalten sind.

Geeignete Pigmentmischungen können sowohl Mischungen aus anorganischen und organischen Pigmenten, als auch Mischungen aus unterschiedlichen anorganischen Pigmenten sowie Mischungen aus unterschiedlichen organischen Pigmenten umfassen.

Die erfindungsgemäßen Beschichtungsmasse können darüber hinaus herkömmliche Additive enthalten, beispielsweise Stabilisatoren, Netzmittel, Flammschutzmittel, Hydrophobierungsmittel, Mattierungsmittel, Oberflächenadditive, insbesondere Silikonoberflächenadditive, beispielsweise polyethermodifiziertes Polymethylalkylsiloxan und/oder Silikonpolyether-Copolymere, Puffersubstanzen, Neutralisationsmittel, pH-Regulatoren, UV-Absorber, Radikalfänger, Alkylsilikonate oder Calciumchlorid und beliebige Mischungen dieser Verbindungen. Vorzugsweise enthält die Zusammensetzung mindestens zwei, drei oder mehr Additive, wie sie in der vorliegenden Anmeldung beschrieben werden.

Unter den Alkylsilikonat-Additiven sind Methylsilikonate und hier insbesondere Kaliummethylsilikonat bevorzugt. In den der erfindungsgemäßen Beschichtungsmassen liegen die Alkylsilikonate, insbesondere Kaliummethylsilikonat, bevorzugt in einer Menge im Bereich von 0,005 bis 1,0 und besonders bevorzugt im Bereich von 0,05 bis 0,75 Gew.-% vor.

Erfindungsgemäß sind auch solche Beschichtungsmassen besonders vorteilhaft, die im Wesentlichen frei von Topfkonservierungsmitteln und/oder im Wesentlichen frei von Filmkonversionsmitteln sowie besonders bevorzugt frei von jeglichen organischen Konservierungsmitteln sind. Diese bevorzugten erfindungsgemäßen Beschichtungsmassen verfügen daher nicht über organische Bioziden, insbesondere nicht über Fungizide und Algizide. Vorzugsweise ist die erfindungsgemäße Beschichtungsmasse frei von jeglichen Fungiziden und Algiziden, deren Wirkung nicht ausschließlich auf einer Änderung des pH-Werts basiert. Eine erfindungsgemäße Beschichtungsmasse ist im Sinne der Erfindung auch dann als im Wesentlichen frei von organischen Bioziden anzusehen, wenn für deren Herstellung auf handelsübliche Komponenten zurückgegriffen wird, deren Lieferformen organische Biozide beinhalten. Die erfindungsgemäßen Beschichtungsmassen sind insbesondere dann als im Wesentlichen frei an organischen Bioziden bzw. organischen Konservierungsmitteln zu betrachten, wenn nach Maßgabe der "Vergabegrundlage für Umweltzeichen" der RAL gGmbH für "Emissionsarme Innenwandfarben RAL-UZ 102" (Ausg. Januar 2015) keine organischen Biozide oder organischen Konservierungsmittel darin enthalten sind oder, jeweils bezogen auf das individuelle Konservierungsmittel, nicht mehr als 2 ppm (einschließlich Formaldehyd) und in Bezug auf 5-Chloro-2-methyl-4-isothiazolin (CIT) weniger als 0,5 ppm.

Es hat sich überraschenderweise gezeigt, dass die erfindungsgemäße Beschichtungsmasse auf organische Biozide oder sonstige Additive mit biozider oder algizider Wirkung verzichten kann und trotzdem eine optimale biozide Langzeitwirkung aufweist. Eine biozide Langzeitwirkung im Sinne der vorliegenden Erfindung ist dabei vorzugsweise eine algizide und/oder fungizide Wirkung, insbesondere eine algizide und fungizide Wirkung, welche mindestens mehrere Monate, vorzugsweise mehrere Jahre anhält. Vorzugsweise ist zumindest eine fungizide Wirkung umfasst, insbesondere eine fungizide und algizide Wirkung.

Insbesondere sind auch solche erfindungsgemäßen, insbesondere pastösen; Beschichtungsmassen, insbesondere Spachtelmassen, bevorzugt, die im Wesentlichen zementfrei sind. Im Sinne der vorliegenden Erfindung kann eine erfindungsgemäße Beschichtungsmasse als im Wesentlichen zementfrei angesehen werden, wenn, sofern Zement überhaupt vorhanden, diese Zementmenge nicht geeignet ist, über die mit Wasser stattfindende Abbindereaktion das Rheologieverhalten der Beschichtungsmasse messbar zu verändern. Besonders bevorzugt sind die erfindungsgemäßen Beschichtungsmassen dann als im Wesentlichen zementfrei anzusehen, wenn darin Zement in einer Menge unterhalb von 0,001 Gewichtsprozent, bevorzugt unterhalb von 0,0001 Gewichtsprozent, besonders bevorzugt unterhalb von 0,00001 Gewichtsprozent und insbesondere wenn darin überhaupt kein Zement vorliegt bzw. kein Zement zugegeben wird.

Besonders zweckmäßig sind auch solche erfindungsgemäßen, insbesondere pastösen, Beschichtungsmassen, insbesondere Spachtelmassen, enthaltend
0,1 bis 2,0, bevorzugt 0,2 bis 1,2 und besonders bevorzugt 0,3 bis 0,8 Gew.-% an Komponente a),
0,01 bis 1,5, bevorzugt 0,05 bis 1,0 und besonders bevorzugt 0,2 bis 0,8 Gew.-% an Komponente b),
0,01 bis 2,0, bevorzugt 0,05 bis 1,5 und besonders bevorzugt 0,2 bis 1,0 Gew.-% an Komponente c),
mehr als 60,0 bis 85,0, bevorzugt 62,0 bis 80,0 und besonders bevorzugt 64,0 bis 78,0 Gew.-% an Komponente d),
0,05 bis 2,0, bevorzugt 0,1 bis 1,5 und besonders bevorzugt 0,2 bis 1,2 Gew.-% an Komponente i),
0,1 bis 8,0, bevorzugt 0,5 bis 4,5 und besonders bevorzugt 1,0 bis 2,5 Gew.-% an Komponente e),
0,01 bis 2,0, bevorzugt 0,05 bis 1,5 und besonders bevorzugt 0,1 bis 1,0 Gew.-% an Komponente h),
0,01 bis 1, bevorzugt 0,03 bis 0,8 und besonders bevorzugt 0,1 bis 0,5 Gew.-% an Komponente j),
0,5 bis 7,0, bevorzugt 0,8 bis 5,0 und besonders bevorzugt 1,5 bis 4,0 Gew.-% an Komponente f) (gerechnet als Feststoffanteil),
15,0 bis 55,0, bevorzugt 18 bis 50,0 und besonders bevorzugt 22 bis 45 Gew.-% an Komponente g), und
0,01 bis 7,5, bevorzugt 0,02 bis 5,0 und besonders bevorzugt 0,03 bis 4,0 Gew.-% an Komponente k), wobei die die Beschichtungsmasse, insbesondere Spachtelmasse, bildenden Komponenten sich stets zu 100,0 Gew.-% addieren.

Ganz besonders bevorzugt geeignet für die Lösung der der Erfindung zugrunde liegenden Aufgabe sind solche erfindungsgemäßen wässrigen Beschichtungsmassen, insbesondere pastösen wässrigen Beschichtungsmassen, bestehend aus oder enthaltend
0,3 bis 0,8 Gew.-% Hydroxypropylmethylcellulose (Komponente a)),
0,2 bis 0,8 Gew.-% organisch modifizierten Schichtsilikat-Verdicker, insbesondere organisch modifizierten Bentonit-basierten Schichtsilikat-Verdicker (Komponente b)),
0,2 bis 1,0 Gew.-% Dispergiermittel, insbesondere Natriumpolyacrylat (Komponente c)),
64,0 bis 78,0 Gew.-% Calciumcarbonat (Komponente d)),
0,2 bis 1,2 Gew.-% Fasermaterial, insbesondere Cellulosefasern (Komponente i)),
1,0 bis 2,5 Gew.-% Calciumhydroxid (Komponente e)),
0,1 bis 1,0 Gew.-% Propylenglykol (Komponente h)),
0,1 bis 0,5 Gew.-% Entschäumer (Komponente j)),
1,5 bis 4,0 Gew.-% Styrol/Acrylat-Dispersion (Komponente f)) (gerechnet als Feststoffanteil) und
22 bis 45 Gew.-% Wasser (Komponente g)) sowie gegebenenfalls
0 bis 7,5, bevorzugt 0 bis 5,0 oder 0,01 bis 4,0 Gew.-% Pigment (Komponente k)),
wobei die die Beschichtungsmasse, insbesondere Spachtelmasse, bildenden Komponenten sich stets zu 100,0 Gew.-% addieren.

Die der Erfindung zugrunde liegende Aufgabe wird des Weiteren gelöst durch eine Beschichtung für ein Substrat, erhalten oder erhältlich aus der erfindungsgemäßen Beschichtungsmasse, insbesondere Spachtelmasse.

Unter den erfindungsgemäßen Beschichtungen sind solche bevorzugt, die eine Pigmentvolumenkonzentration größer oder gleich 85 %, bevorzugt größer oder gleich 88 % und besonders bevorzugt größer oder gleich 92 % und insbesondere im Bereich von 93 % bis 97 %, aufweisen.

Mit den erfindungsgemäßen Beschichtungsmassen, insbesondere Spachtelmassen, lassen sich Beschichtungen auf Gebäudewänden oder Gebäudedecken, insbesondere im Innenbereich, ohne weiteres anbringen, wobei die Anbringung auf Gipsuntergründen besonders bevorzugt ist.

Es hat sich überraschenderweise gezeigt, dass die biozide Langzeitwirkung auch in Innenräumen gewährleistet werden kann, obgleich dort eine vergleichsweise hohe Kohlenstoffdioxidkonzentration üblich ist.

Die erfindungsgemäße Beschichtungsmasse zeichnet sich durch eine hohe Umweltverträglichkeit aus, wobei ein effektiver Langzeitschutz gegen Schimmel, Algenbildung und Bakterienbefall erreicht wird. Überraschenderweise kann auf herkömmliche organische Biozide gänzlich verzichtet werden. Es hat sich ferner gezeigt, dass einige der möglichen weiteren Inhaltsstoffe den bioziden Langzeitschutz erheblich beeinflussen und verbessern können.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Wässrige Beschichtungsmasse, insbesondere pastöse wässrige Beschichtungsmasse, vorzugsweise Spachtelmasse, insbesondere für den Innenbereich, enthaltend oder bestehend aus
a) mindestens einem hydrophob modifizierten Hydroxycelluloseether und/oder mindestens ein Reaktionsprodukt aus einem hydrophob modifizierten Hydroxycellulose ether und einer ersten chemischen Verbindung, die mindestens eine Aldehydgruppe und mindestens eine Säuregruppe enthält, und/oder mindestens ein Reaktionsprodukt aus einem hydrophob modifizierten Hydroxycelluloseether und einer zweiten chemischen Verbindung, die mindestens zwei Aldehydgruppen enthält,
b) mindestens einem Rheologieadditiv, umfassend oder bestehend aus mindestens einem organisch modifizierten Schichtsilikat-Verdicker,
c) mindestens einem Dispergiermittel,
d) mindestens einem Füllstoff, insbesondere Calciumcarbonat,
e) Calciumhydroxid,
f) mindestens einem organischen Bindemittel in Form einer wässrigen Polymerdispersion und
g) Wasser,
wobei die Beschichtungsmasse, insbesondere Spachtelmasse, einen pH-Wert größer oder gleich 10,0, insbesondere im Bereich von 11,5 bis 13,0, ermittelt gemäß DIN 55659-1:2012-1 bei einer Temperatur von 23 ± 2 °C, aufweist oder auf einen pH-Wert größer oder gleich 10,0, insbesondere im Bereich von 11,5 bis 13,0, eingestellt ist,
wobei die Beschichtungsmasse, insbesondere Spachtelmasse, bezogen auf deren Gesamtgewicht, mehr als 60,0, bevorzugt 62,0 bis 80,0 und besonders bevorzugt 64,0 bis 78,0 Gew.-% an Komponente d) aufweist.

2. Beschichtungsmasse nach Anspruch 1, ferner umfassend
h) mindestens ein bei Raumtemperatur flüssiges organisches Lösungsmittel,
i) mindestens ein Fasermaterial,
j) mindestens einen Entschäumer und/oder
k) mindestens ein Pigment, insbesondere Buntpigment.

3. Beschichtungsmasse nach Anspruch 1 oder 2, **dadurch gekennzeichnet, dass** der hydrophob modifizierte Hydroxycelluloseether einen Hydroxyalkylcelluloseether, insbesondere Hydroxyethylcelluloseether und/oder Hydroxypropylcelluloseether, umfasst oder hieraus besteht.

4. Beschichtungsmasse nach einem der vorangehenden Ansprüche, **dadurch gekennzeichnet, dass**
das Rheologieadditiv ferner umfasst Polyacrylat-Verdicker, Polyurethan-Verdicker, Polyharnstoff-Verdicker, Polyvinylalkohol-Verdicke r, Polyetherpolyol-Verdicker, nicht organisch modifizierte Schichtsilikat-Verdicker, Stärkeether-Verdicker, Celluloseether-Verdicker, der kein Celluloseether-Verdicker gemäß Komponente a) ist, Polysaccharid-Verdicker, bevorzugt Xanthan und/oder Fettalkoholethoxylat-Verdicker, besonders bevorzugt Fettalkoholethoxylat-Verdicker.

5. Beschichtungsmasse nach einem der vorangehenden Ansprüche, **dadurch gekennzeichnet, dass**
der organisch modifizierte Schichtsilikat-Verdicker ein Bentonit-basierter Schichtsilikat-Verdicker ist oder diesen umfasst.

6. Beschichtungsmasse nach einem der vorangehenden Ansprüche, **dadurch gekennzeichnet, dass**
der Füllstoff calcitische Füllstoffe, bevorzugt Calciumcarbonat und/oder Calcium/Magnesiumcarbonat, besonders bevorzugt Calciumcarbonat, und/oder silikatische Füllstoffe, insbesondere calcitische Füllstoffe, umfasst oder hieraus besteht.

7. Beschichtungsmasse nach einem der Ansprüche 2 bis 6, **dadurch gekennzeichnet, dass**
das mindestens eine bei Raumtemperatur flüssige organische Lösungsmittel ein aliphatisches organisches Lösungsmittel umfasst oder hieraus besteht, bevorzugt umfassend Di- und/oder Polyole und besonders bevorzugt 1,2-Propylenglykol.

8. Beschichtungsmasse nach einem der vorangehenden Ansprüche, **dadurch gekennzeichnet, dass**
das mindestens eine organische Bindemittel in Form einer wässrigen Polymerdispersion auf Homo- und/oder Copolymeren enthaltend Acrylate, Methacrylate, Vinylacetat und/oder Styrol basiert, wobei
das Copolymer bevorzugt ein Copolymer auf Basis von Vinylacetat und Ethylen oder ein Copolymer auf Basis von Styrol und Acrylaten und besonders bevorzugt ein Copolymer auf Basis von Styrol und Acrylaten darstellt.

9. Beschichtungsmasse nach einem der vorangehenden Ansprüche, **dadurch gekennzeichnet, dass**
diese im Wesentlichen topfkonservierungsmittelfrei und/oder im Wesentlichen filmkonservierungsmittelfrei und insbesondere im Wesentlichen konservierungsmittelfrei ist.

10. Beschichtungsmasse nach einem der vorangehenden Ansprüche, **dadurch gekennzeichnet, dass**
der hydrophob modifizierte Celluloseether Alkyl-Seitenketten mit mehr als zwei C-Atomen aufweist.

11. Beschichtungsmasse nach einem der vorangehenden Ansprüche, **dadurch gekennzeichnet, dass**
der hydrophob modifizierte Hydroxycelluloseether ausgewählt ist aus der Gruppe bestehend aus Hydroxyethylmethylcellulose, Hydroxypropylmethylcellulose, Ethylhydroxyethylcellulose, Hydroxyethylcellulose, Hydroxypropylcellulose und deren beliebigen Mischungen.

12. Beschichtungsmasse nach einem der vorangehenden Ansprüche, **dadurch gekennzeichnet, dass**
die Beschichtungsmasse, insbesondere Spachtelmasse, eine Viskosität von mindestens 0,5 Pa·s, vorzugsweise von mindestens 1,0 Pa·s, jeweils gemessen bei einer Temperatur von 23 ±0,20 °C und einer Scherrate von 100 s⁻¹ mit dem Messbecher Z2 mit einem Durchmesser von 45 mm und dem Messzylinder Z3 mit einem Durchmesser von 25 mm, aufweist und/oder dass
die Beschichtungsmasse, insbesondere Spachtelmasse, die bei einer Temperatur von 23 ±0,20 °C einer innerhalb von 100 sec stetig ansteigenden Scherrate von 0,01 bis 100 s⁻¹, anschließend für die Dauer von 150 sec einer Scherrate von 100 s⁻¹ und abschließend einer innerhalb von 100 sec stetig abfallenden Scherrate von 100 bis 0,01 s⁻¹ ausgesetzt wurde, in Bezug auf die Messpunkte bei Erreichen der Scherrate von 100 s⁻¹ und bei Verlassen der Scherrate von 100 s⁻¹ eine Viskositätsdifferenz von maximal 0,3 Pa·s, vorzugsweise von maximal 0,2 Pa·s und besonders bevorzugt von maximal 0,15 Pa·s, aufweist

13. Beschichtungsmasse nach einem der vorangehenden Ansprüche, **dadurch gekennzeichnet, dass**
der mindestens eine Füllstoff d), bestimmt gemäß DIN EN 933-10:2009-10, eine durchschnittliche Partikelgröße kleiner oder gleich 1000 µm, bevorzugt kleiner oder gleich 500 µm und besonders bevorzugt kleiner oder gleich 300 µm aufweist und/oder dass
der mindestens eine Füllstoff d), bestimmt gemäß DIN EN 933-10:2009-10, eine maximale Partikelgröße kleiner oder gleich 1500 µm, bevorzugt kleiner oder gleich 750 µm und besonders bevorzugt kleiner oder gleich 500 µm aufweist.

14. Beschichtungsmasse nach einem der vorangehenden Ansprüche, **dadurch gekennzeichnet, dass**
die erste chemische Verbindung mit der mindestens einen Aldehydgruppe und der mindestens einen Säuregruppe, insbesondere Glyoxalsäure, oder die zweite chemische Verbindung mit den mindestens zwei Aldehydgruppen, insbesondere Glutaraldehyd, mit der oder den Hydroxygruppen des Hydroxycelluloseethers unter Wasserabspaltung das Reaktionsprodukt bilden.

15. Beschichtungsmasse nach einem der vorangehenden Ansprüche, **dadurch gekennzeichnet, dass**
diese im Wesentlichen zementfrei und/oder, insbesondere und, frei von Pigmenten ist.

16. Beschichtungsmasse nach einem der vorangehenden Ansprüche, **dadurch gekennzeichnet, dass**
das Dispergiermittel Natriumpolyphosphat, insbesondere in Form eines Natriumpolyphosphatsalzes von, vorzugsweise niedermolekularen, Polyacrylsäuren, umfasst oder hieraus besteht.

17. Beschichtungsmasse nach einem der vorangehenden Ansprüche, enthaltend 0,1 bis 2,0, bevorzugt 0,2 bis 1,2 und besonders bevorzugt 0,3 bis 0,8 Gew.-% an Komponente a),
0,01 bis 1,5, bevorzugt 0,05 bis 1,0 und besonders bevorzugt 0,2 bis 0,8 Gew.-% an Komponente b),
0,01 bis 2,0, bevorzugt 0,05 bis 1,5 und besonders bevorzugt 0,2 bis 1,0 Gew.-% an Komponente c), mehr als 60,0 bis 85,0, bevorzugt 62,0 bis 80,0 und besonders bevorzugt 64,0 bis 78,0 Gew.-% an Komponente d),
0,05 bis 2,0, bevorzugt 0,1 bis 1,5 und besonders bevorzugt 0,2 bis 1,2 Gew.-% an Komponente i),
0,1 bis 8,0, bevorzugt 0,5 bis 4,5 und besonders bevorzugt 1,0 bis 2,5 Gew.-% an Komponente e),
0,01 bis 2,0, bevorzugt 0,05 bis 1,5 und besonders bevorzugt 0,1 bis 1,0 Gew.-% an Komponente h),
0,01 bis 1, bevorzugt 0,03 bis 0,8 und besonders bevorzugt 0,1 bis 0,5 Gew.-% an Komponente j),
0,5 bis 7,0, bevorzugt 0,8 bis 5,0 und besonders bevorzugt 1,5 bis 4,0 Gew.-% an Komponente f) (gerechnet als Feststoffanteil),
15,0 bis 55,0, bevorzugt 18 bis 50,0 und besonders bevorzugt 22 bis 45 Gew.-% an Komponente g), und
0,01 bis 7,5, bevorzugt 0,02 bis 5,0 und besonders bevorzugt 0,03 bis 4,0 Gew.-% an Komponente k), jeweils bezogen auf das Gesamtgewicht der Beschichtungsmasse, wobei die die Beschichtungsmasse, insbesondere Spachtelmasse, bildenden Komponenten sich stets zu 100,0 Gew.-% addieren.

18. Beschichtung für ein Substrat, erhalten oder erhältlich aus der Beschichtungsmasse, insbesondere Spachtelmasse, gemäß einem der vorangehenden Ansprüche.

19. Beschichtung nach Anspruch 18, **dadurch gekennzeichnet, dass** diese eine Pigmentvolumenkonzentration größer oder gleich 85 %, bevorzugt größer oder gleich 88 % und besonders bevorzugt größer oder gleich 92 % und insbesondere im Bereich von 93 % bis 97 %, aufweist.

20. Verwendung der Beschichtungsmasse, insbesondere Spachtelmasse, gemäß einem der Ansprüche 1 bis 17 für die Anbringung auf einer Gebäudewand oder Gebäudedecke im Innenbereich, insbesondere auf Gipsuntergründen.
